# EUROPEAN PATENT SPECIFICATION

(11) **EP 3 103 684 B1**
(45) Date of publication and mention of the grant of the patent: **03.01.2018**
(21) Application number: 15465519.5
(22) Date of filing: 11.06.2015
(51) Int. Cl.: B60R 11/04

(54) **CAMERA BRACKET FOR A VEHICLE**
KAMERHALTERUNG FÜR EIN FAHRZEUG
SUPPORT DE CAMÉRA POUR UN VÉHICULE

(43) Date of publication of application: 14.12.2016
(73) Proprietor: Continental Automotive GmbH, 30165 Hannover (DE)
(72) Inventor: Balas, George, 327030 Berzovia (RO); Gheorghe, Lucian, 300440 Timisoara (RO)
(74) Representative: Bobbert, Christiana

(56) References cited:
- WO-A1-2013/141000
- DE-A1-102011 121 003

## Description

This application relates to a camera bracket for a vehicle.
A vehicle can have a camera, which act as a sensor for providing different functions for assisting a driver of the vehicle and for improving vehicle safety. The sensor functions include high beam light assist, lane departure warning, traffic sign recognition, and pedestrian detection.
The camera is often mounted on a windshield of the vehicle using one bracket. In order to ensure a proper functionality of the camera, the bracket should satisfy a few requirements. The most important function relates to fixing of the camera in a correct position, wherein the bracket has specific reference surfaces for contacting with camera reference elements. The bracket reference surfaces are intended for receiving four bolts.
US20120207461 A1 discloses a camera of a vehicle. The camera has a case and a lens and it is located inside the vehicle. The lens is exposed at a top face of the case, wherein the top face is opposed to a windshield of the vehicle. The top face has an angular shape bent at a ridge line that passes through the top face. The lens is positioned in the vicinity of the ridge line.

WO 2013/141000 A1 discloses a sensor module according to the preamble of claim, having an on-board camera, wherein, when an on-board camera body of the on-board camera is hooked on a hook-like portion of a bracket attached onto a front glass, a leaf spring presses and fixes the on-board camera body onto the bracket.

DE 10 2011 121 003 A1 discloses a support device for fastening to a window pane, in particular a windscreen, of a motor vehicle, which comprises a support plate, that can be fastened on the window pane and has at least one supporting element on which at least one camera sensor can be fastened in a fastening zone on the support plate, and comprises a spring arrangement that has at least one spring element by means of which the camera can be acted upon by force against the supporting element, wherein the supporting element has a receptacle in which a retaining element of the camera can be received at least in some regions and in which the spring element by means of which the retaining element can be acted on directly by the force is arranged at least in some regions.

It is an object of this application to provide an improved camera bracket.

The application provides an improved mounting of the camera onto the bracket using a spring on a bracket lateral wall.

This mounting advantageously also prevents mounting of the camera with a wrong position.

The application provides a sensor module for attaching to a vehicle.

The vehicle is used for transporting people or goods. The sensor module provides information for operating the vehicle. Examples of the sensor include a camera and a Global Positional System receiver.

The sensor module includes a sensor case with a bracket unit for receiving the sensor case.

The sensor case includes one or more sensor case protrusions, which are provided at one side of the sensor case. The sensor case protrusions can be in the form of a projection, a pin, a finger, or a nose. The sensor case protrusions project from an external surface of the sensor case. The sensor case is intended for enclosing a vehicle sensor.

The bracket unit can be fasten onto the sensor case and can be unfasten from the sensor case. The bracket unit is also intended for attaching to the vehicle, wherein the bracket unit is often used for attaching to an interior part of the vehicle, such as a windshield.

The bracket unit comprises one or more bracket socket portions, one or more bracket lateral elastic elements, and one or more bracket-abutting portions.

In detail, the bracket socket portions are used for receiving the corresponding sensor case protrusions.

The bracket socket portions and the bracket lateral elastic elements are provided at a first side of the bracket unit.

The bracket-abutting portions are provided at a second side of the bracket unit, wherein the second side is placed opposite to the first side.

In practice, the sensor module provides a mounting position.

In the mounting position, a user inserts the sensor case into the bracket unit such that the bracket socket portions receive the corresponding sensor case protrusions.

The bracket elastic lateral elements then essentially press the sensor case towards the bracket-abutting portions. The pressing is in a lateral direction of the bracket unit, wherein the lateral direction extends between the first side and the second side of the bracket unit.

In short, the bracket elastic lateral elements push the sensor case towards the bracket-abutting portions. The bracket-abutting portions act to support or block the exerting force of the camera case.

The sensor case later frictionally engages with the bracket-abutting portion.

In this manner, the sensor case is fastened onto the bracket unit.

This sensor module provides a simple and effective way of fastening the sensor case onto the bracket unit.

The bracket unit includes one or more further bracket lateral elastic elements and one or more further bracket-abutting portions.

The further bracket lateral elastic elements are provided at a third side of the bracket unit. The third side is different from the first side and is different from the second side. The further bracket-abutting portions are provided at a fourth side of the bracket unit, the fourth side being opposite to the third side.

In the mounting position, the further bracket lateral elastic elements press the sensor case towards the further bracket-abutting portions. The pressing is in a further lateral direction that extends between the third side and the fourth side of the bracket unit. The sensor case is later frictionally engaged with the further bracket-abutting portions.

These elements act to engage the sensor case in another direction for further securing the sensor case.

In another implementation, the bracket unit includes one or more bracket perpendicular elastic elements.

In the mounting position, the bracket perpendicular elastic elements press the sensor case in a direction, which is essentially perpendicular to the lateral direction and essentially perpendicular to the further lateral direction.

The elements engage the sensor case in a further direction for further securing the sensor case.

The bracket unit can include a baseplate for providing a firm structure.

One or more of the bracket lateral elastic elements, of the further bracket lateral elastic elements, and of the bracket perpendicular elastic elements can be integrally connected with the baseplate.

The bracket unit can include an elongated bracket abutting plate, which projects from the baseplate, for holding the sensor case.

The bracket-abutting portion can be an integral part of the bracket abutting plate.

The sensor case can include a camera case or other types of sensor case.

Each sensor case protrusion can include a cylindrical pin for easier design.

The sensor case protrusions can be provided as an integral part of the sensor case for easier production of the sensor case.

In one implementation, the sensor case comprises two sensor case protrusions while the bracket unit comprises two corresponding bracket socket portions.

The application provides a method for assembling a vehicle sensor module.

The method includes a step of receiving one or more sensor case protrusions of a sensor case by corresponding bracket socket portions of a bracket unit. The sensor case protrusions are provided at one side of the sensor case while the bracket socket portions together with one or more bracket lateral elastic elements are provided at a first side of a bracket unit.

The bracket elastic lateral elements then press the sensor case towards one or more bracket-abutting portions of the bracket unit. The pressing is in a lateral direction that extends between the first side and a second side of the bracket unit, wherein the second side is placed opposite to the first side.

The sensor case later frictionally engages with the bracket-abutting portions of the bracket unit to fasten the sensor case onto the bracket unit.
- Fig. 1: illustrates a perspective view of a rear side of an improved bracket unit, which is intended for attaching to a vehicle,
- Fig. 2: illustrates a perspective view of a front side of the bracket unit of Fig. 1,
- Fig. 3: illustrates a perspective view of an elastic element of the bracket unit of Fig. 1,
- Fig. 4: illustrates a rear view of a camera case, the camera case is intended for attaching to the bracket unit of Fig. 1,
- Fig. 5: illustrates a front view of the camera case of Fig. 4,
- Fig. 6: illustrates a perspective view of a first step of mounting the camera case of Fig. 4 onto the bracket unit of Fig. 1,
- Fig. 7: illustrates a cross-sectional side view of the first step of Fig. 6,
- Fig. 8: illustrates a perspective view of a second step of mounting the camera case of Fig. 4 onto the bracket unit of Fig. 1,
- Fig. 9: illustrates a cross-sectional side view of the second step of Fig. 8,
- Fig. 10: illustrates a perspective view of a third step of mounting the camera case of Fig. 4 onto the bracket unit of Fig. 1,
- Fig. 11: illustrates a cross-sectional side view of the third step of Fig. 10,
- Fig. 12: illustrates another cross-sectional side view of the third step of Fig. 10,
- Fig. 13: illustrates a perspective view of a front side of a further bracket unit, and
- Fig. 14: illustrates a perspective view of a further elastic element of the bracket unit of Fig. 13.

In the following description, details are provided to describe embodiments of the application. It shall be apparent to one skilled in the art, however, that the embodiments may be practiced without such details.

Some parts of the embodiments have similar parts. The similar parts may have the same names or similar part numbers. The description of one similar part also applies by reference to another similar parts, where appropriate, thereby reducing repetition of text without limiting the disclosure.

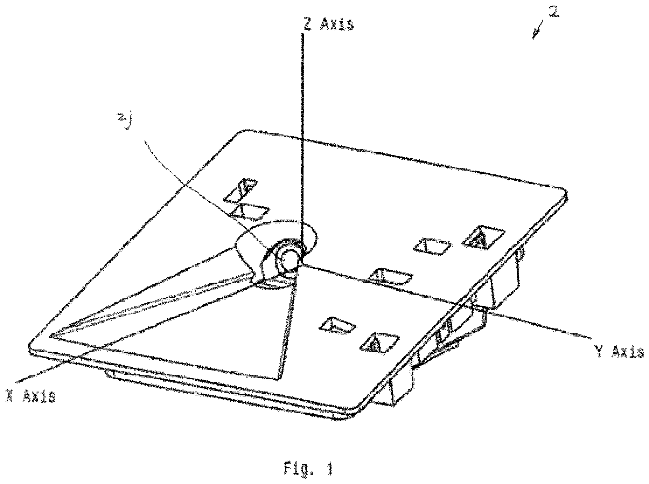

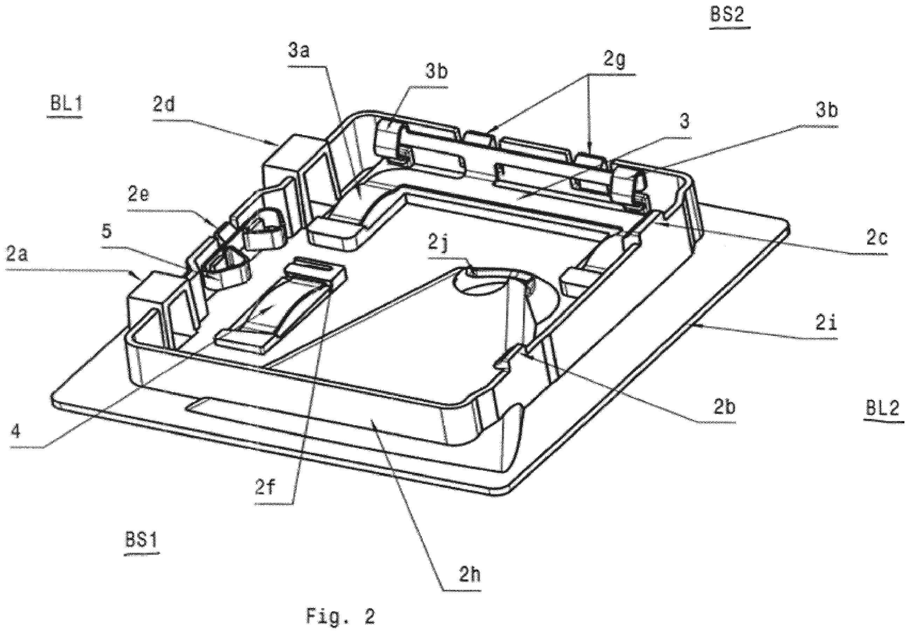

Figs. 1 and 2 show different views of an improved bracket unit 2 of a vehicle.

The bracket unit 2 has a baseplate 2i with two opposing major faces. One major face of the baseplate 2i is intended for attached to an interior part of the vehicle, such as a windshield. The other major face of the baseplate 2i comprises features for attaching to a camera case and comprises a bracket lens opening 2j.

The bracket features include a plurality of bracket engagement features with a plurality of bracket elastic features.

The bracket engagement features include a first bracket socket portion 2a with a second bracket socket portion 2d and a first bracket plate portion 2b with a second bracket plate portion 2c. The bracket engagement features also include a third bracket plate portion 2h.

The bracket elastic features include a first bracket elastic attachment feature 2e with a first elastic element 5, a second bracket elastic attachment feature 2f with a second elastic element 4, and a third bracket attachment feature 2g with a third elastic element 3. Each elastic element 3, 4, and 5 can stretch and can then go back to its original length or shape. The elastic elements 3, 4, and 5 are also called spring elements.

The baseplate 2i has a shape of a rectangle with two opposing long sides BL1 and BL2 and with two opposing short sides BS1 and BS2.

The bracket engagement features are placed on an outer part while the bracket elastic attachment feature 2f is placed on an inner part of the baseplate 2i. The bracket lens opening 2j is placed on a central part of baseplate 2i.

Referring to the bracket features, the bracket socket portion 2a, the bracket attachment feature 2e with the first elastic element 5, and the bracket socket portion 2d are placed at the long side BL1 of the baseplate 2i. The bracket plate portions 2b and 2c are placed at the long side BL2 of the baseplate 2i. The bracket attachment feature 2g with parts of the elastic element 3 being placed at the short side BS2 of the baseplate 2i. The bracket plate portion 2h is placed at the short side BS1 of the baseplate 2i.

The elastic element 3 includes two parts, namely a baseplate elastic element 3a and a projection elastic element 3b.

The projection elastic element 3b is placed at the short side BS2 of the baseplate 2i. Parts of the elastic element 3b are attached to the bracket attachment feature 2g.

The baseplate elastic element 3a is placed on the baseplate 2i.

The bracket elastic attachment feature 2e is placed between the bracket socket portion 2a and the bracket socket portion 2d. The elastic element 5 is attached to a central part of the bracket elastic attachment feature 2e.

The bracket plate portion 2b is placed opposite to the bracket socket portion 2a. The bracket plate portion 2c is placed opposite to the bracket socket portion 2d.

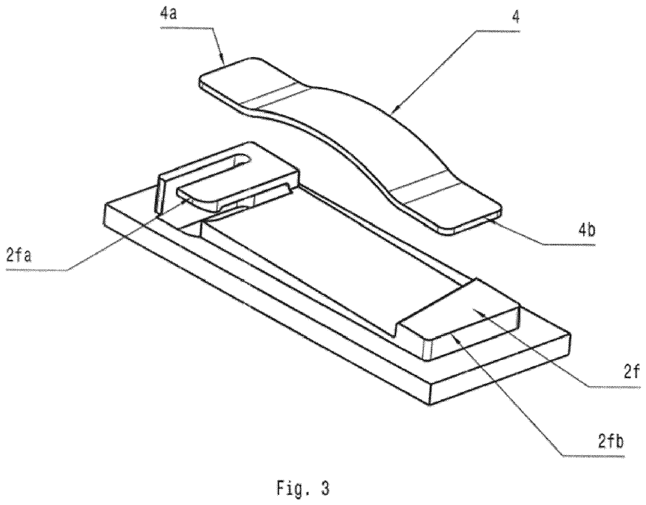

Referring to the bracket elastic attachment feature 2f, it is placed on the baseplate 2i. Parts of the elastic element 4 are attached to the bracket attachment feature 2f. In detail, as shown in Figs. 2 and 3, end parts 4a and 4b of the elastic element 4 are inserted into corresponding receiving parts 2fa and 2fb of the bracket elastic attachment feature 2f. The elastic element 4 is placed in a slightly urged or biased state.

The baseplate 2i is produced using plastic material.

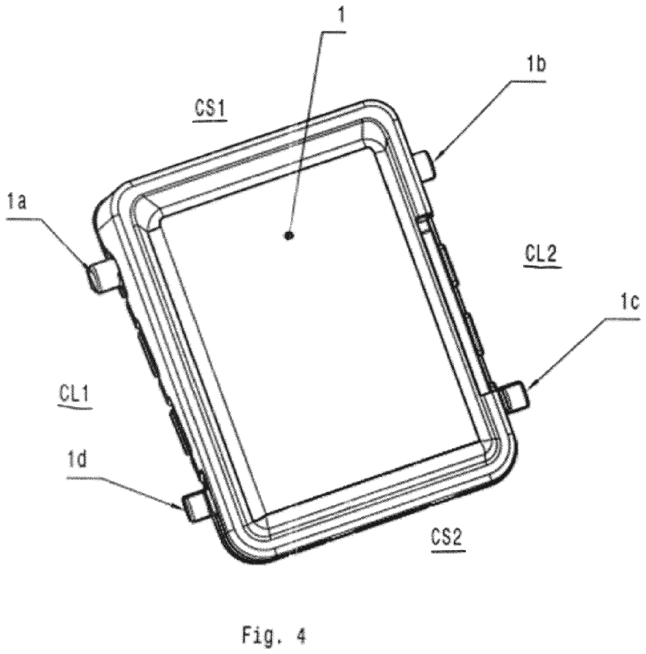

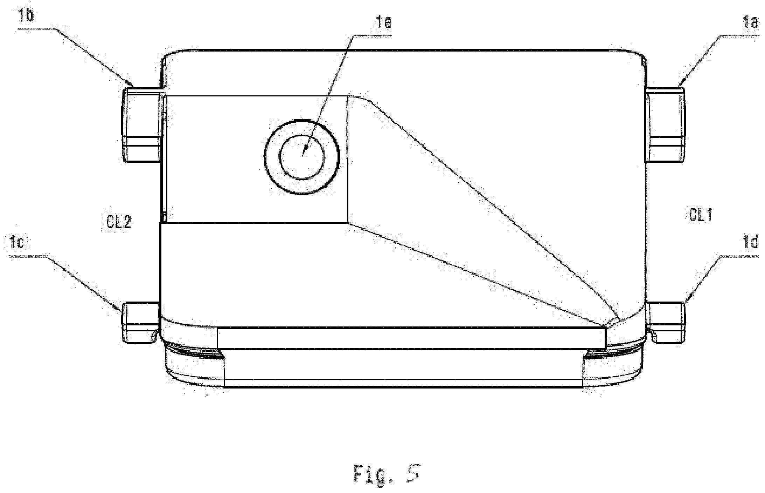

Figs. 4 and 5 show a camera with a camera case 1. The camera case 1 is intended for attaching to the bracket unit 2.

The camera case 1 includes cylindrical pins 1a, 1b, 1c, and 1d. The camera case 1 also includes a camera lens opening 1e, as shown in Fig. 5.

The camera case 1 has a body with a mainly rectangular profile that includes two opposing long sides CL1 and CL2 and two opposing short sides CS1 and CS2. The cylindrical pins 1a and 1d are placed on the long side CL1 of the camera case 1. The cylindrical pins 1b and 1c are placed on the other long side CL2 of the camera case 1. The cylindrical pin 1a is placed facing the cylindrical pin 1b while the cylindrical pin 1d is placed facing the cylindrical pin 1c.

The baseplate 2i and the camera case 1 are produced using aluminium material, although other materials can also be used.

In use, the bracket unit 2 is intended for receiving the camera case 1.

After the bracket unit 2 is assembled, the elastic elements 3a and 4 are attached to the baseplate 2i, wherein the elastic elements 3a and 4 are placed in a slightly urged state. The elastic elements 3b and 5 are placed in a relaxed or uncompressed state.

The bracket elastic attachment feature 2e is holding the elastic element 5, which is placed in the relaxed state.

The bracket attachment feature 2g is holding the elastic element 3b. The bracket attachment feature 2g compresses parts of the elastic element 3b such that the elastic element 3b is placed in the relaxed state.

The bracket elastic attachment feature 2f is holding the elastic element 4. In detail, the receiving parts 2fa and the 2fb of the bracket elastic attachment feature 2f compress the end parts 4a and 4b of the elastic element 4 such that the elastic element 4 is in the slightly urged state.

The elastic element 3a is attached to the baseplate 2i and it is placed in the slightly urged state.

The bracket unit 2 provides different mounting positions for receiving the camera case 1. The mounting positions include a first mounting position, a second mounting position, and a third mounting position.

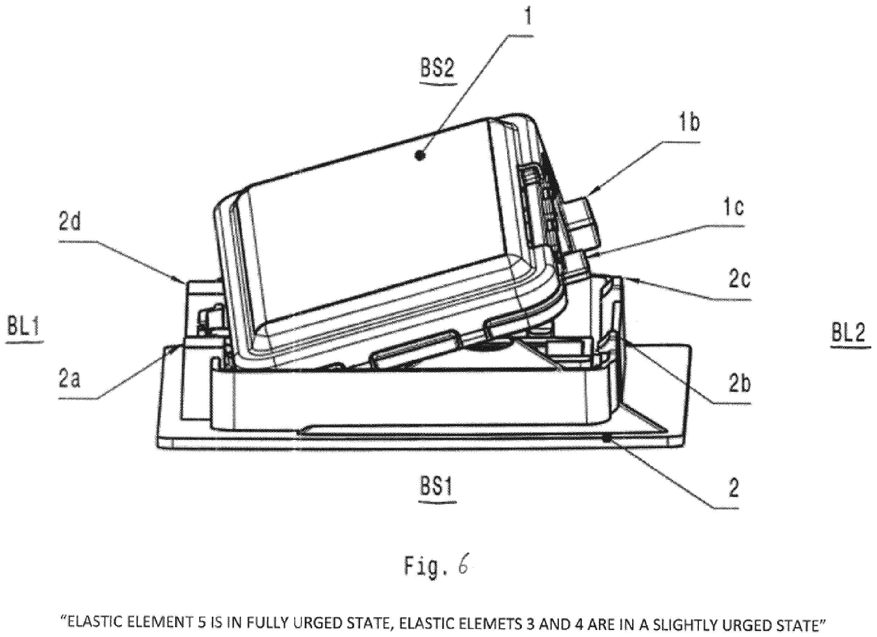

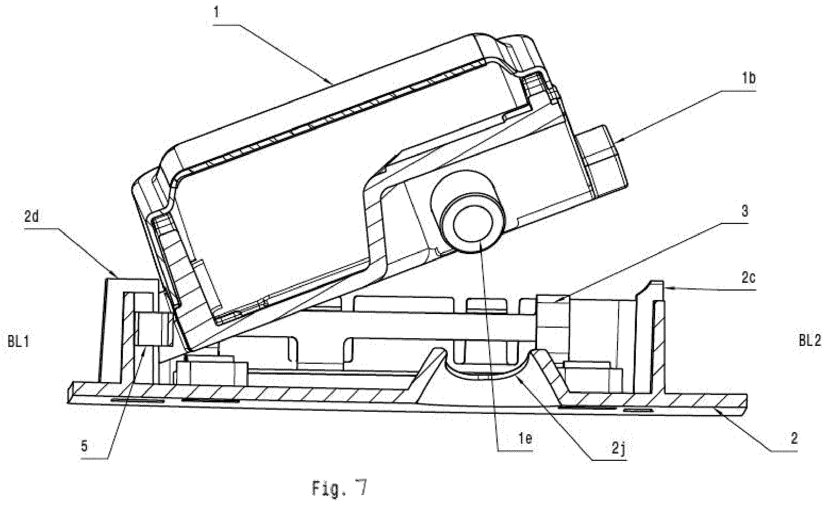

Figs. 6 and 7 show the first mounting position.

In this position, the bracket unit 2 receives the camera case 1 such that the bracket socket portion 2d receives the cylindrical pin 1a while the bracket socket portion 2a receives the cylindrical pin 1d.

An outer edge at the long side CL1 of the camera case 1 is pressed against the elastic element 5 such that the elastic element 5 is placed in a fully urged state.

The elastic elements 3a, 3b, and 4 remain in the slightly urged state.

In detail, as visibly seen in Fig. 5, the camera 1 has a lateral wall, which is placed at the CL1 side. In a first step of mounting the camera 1 into the bracket unit 2, the camera lateral wall compresses the elastic element 5, which acts a lateral bracket spring.

The camera 1 and the bracket unit 2 are configured such that the camera 1 can be mounted into the bracket unit 2 only when this camera lateral wall compresses the elastic element 5. The lateral bracket spring can be compressed only with this camera lateral wall. In effect, the camera 1 cannot be mounted into the bracket unit 2 in other positions.

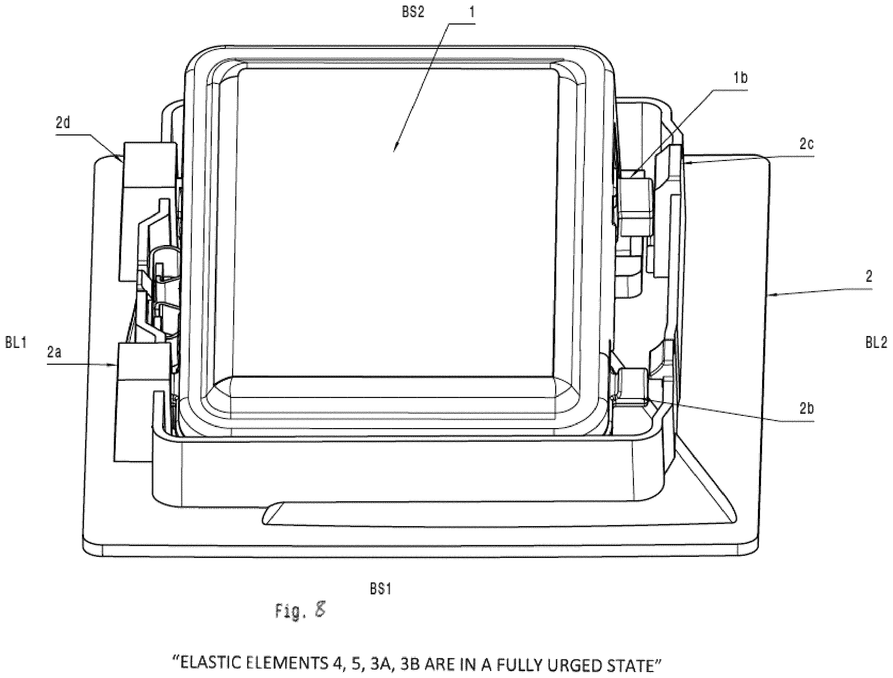

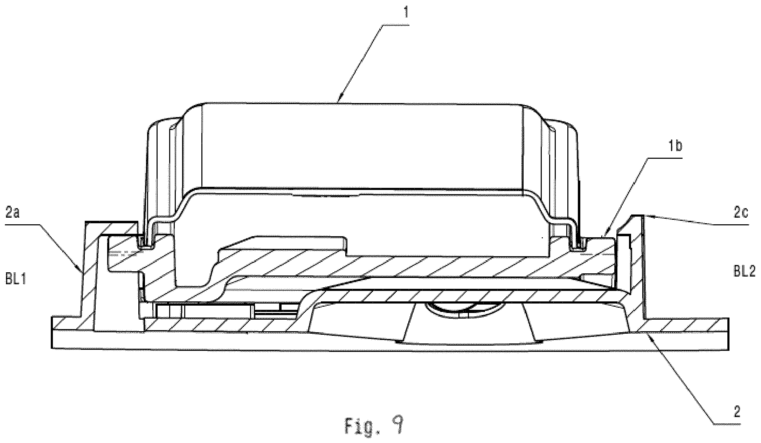

Figs. 8 and 9 show the second mounting position.

In this position, the bracket unit 2 receives the camera case 1 such that the bracket socket portion 2d continues to receive the cylindrical pin 1a while the bracket socket portion 2a continues to receive the cylindrical pin 1d.

Moreover, the camera case 1 is tilted such that the camera lens opening 1e is placed next to the bracket lens opening 2j. This placement of the camera lens opening and the bracket lens opening 2j allows light rays from objects, which are placed in front of the camera, to travel to the bracket lens opening 2j, to the camera lens opening 1e, and into the camera. This thereby allows the camera to pictures of these objects.

The bracket unit 2 and the camera 1 are configured such, if the camera case 1 is rotated by 180 degrees, the camera lens opening 1e is blocked from being placed next to the bracket lens opening 2j. In other words, the bracket unit 2 and the camera case 1 are advantageously configured to prevent an incorrect placement of the camera case 1.

The camera case 1 is also pressed against the elastic elements 3a, 3b, 4, and 5 such these elastic elements 3a, 3b, 4, and 5 are placed in the fully urged state.

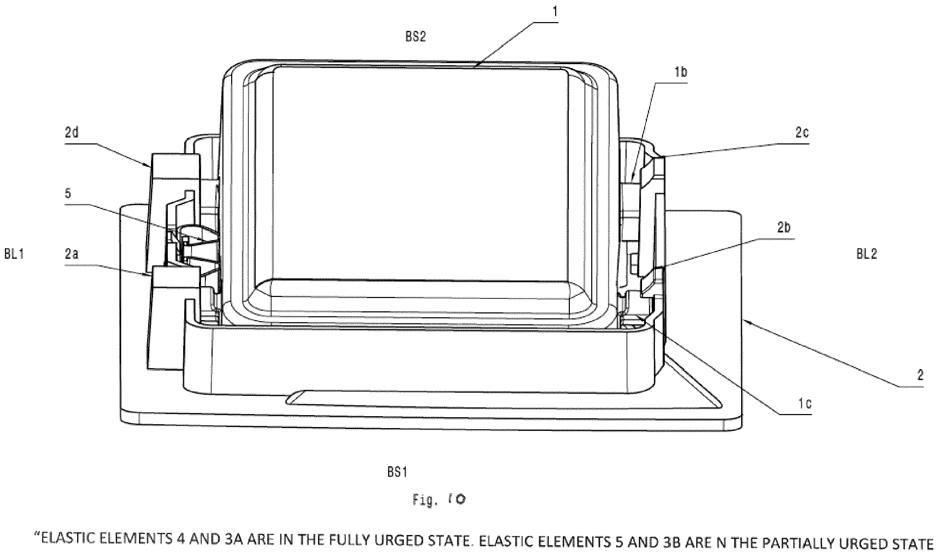

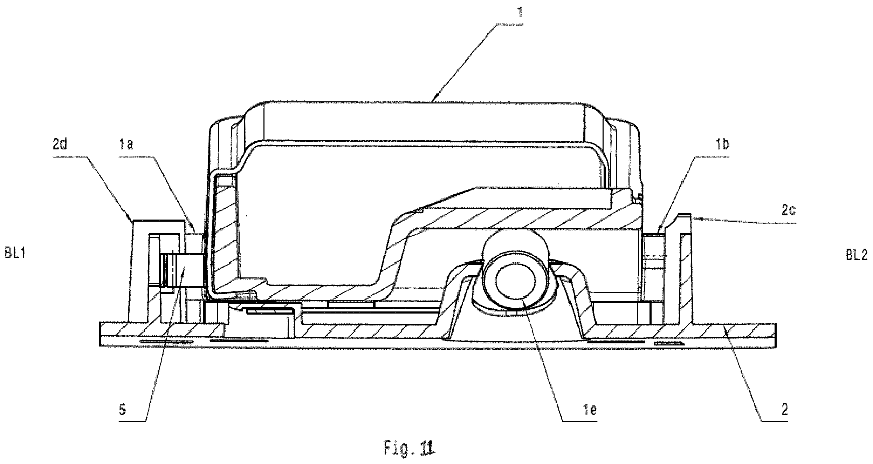

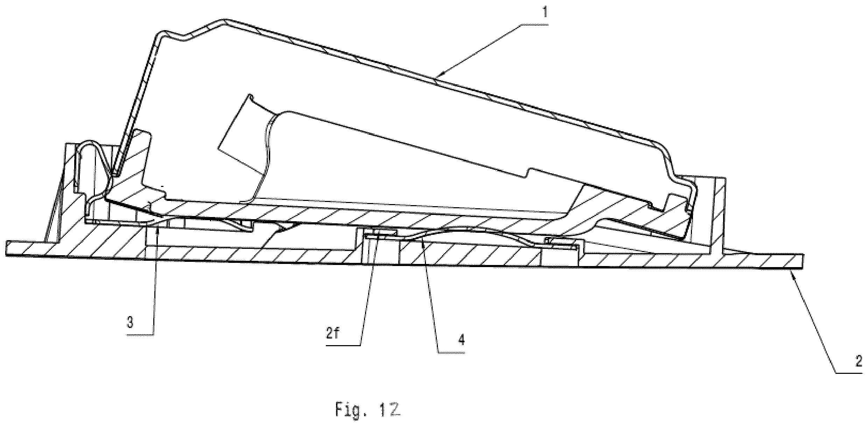

Figs. 10, 11, and 12 show the third mounting position.

In this position, the bracket socket portion 2d continues to receive the cylindrical pin 1a while the bracket socket portion 2a continues to receive the cylindrical pin 1d.

The elastic elements 4 and 3a remains in the fully urged state. The elastic elements 4 and 3a act to push the camera case 1 in the Z-axis away from the baseplate 2i. The Z-axis is shown in Fig. 1.

The elastic element 5 pushes the camera case 1 towards the long side BL2 along a Y-axis such that the elastic element 5 is placed in a partial urged state. The Y-axis is shown in Fig. 1.

The partially urged elastic element 5 pushes camera case 1 to cause the cylindrical pin 1c to engage frictionally with the bracket plate portion 2b.

In detail, the cylindrical pin 1c presses against the bracket plate portion 2b, wherein the bracket plate portion 2b supports the exertion of the cylindrical pin 1c. In other words, the bracket plate portion 2b blocks the cylindrical pin 1c. The contact of the cylindrical pins 1c with the bracket plate portion 2b also creates a frictional engagement of the cylindrical pins 1c with the bracket plate portion 2b. A frictional force prevents the cylindrical pins 1c from moving with respect to the bracket plate portion 2b.

Similarly, the partially urged elastic element 5 pushes camera case 1 to cause the cylindrical pin 1b to engage frictionally with the bracket plate portion 2c.

Referring to the elastic element 3b, the elastic element 3b pushes the camera case 1 towards the short side BS1 along the X-axis, wherein the elastic element 3b is placed in a partial urged state. The X-axis is shown in Fig. 1.

The pushed camera case 1 causes the camera case 1 to engage frictionally with the bracket plate portion 2h.

In short, the camera case 1 is pushed in the direction of the X-axis, the direction of the Y-axis, and the direction of the Z-axis. These three directions of forces act to keep the camera case 1 in a stable position. In other words, the camera case 1 does not move essentially in all directions. This is useful for the camera case 1, especially for a vehicle, which the camera case 1 is mounted, travelling over rough terrains. In short, these forces also act to fasten the bracket unit 2 onto the camera case 1 for keeping the camera case 1 from moving or shifting with respect to the bracket unit 2.

These forces also act to place the camera case 1 in a predetermined position with respect to the bracket unit 2.

A method of attaching the camera case 1 onto the bracket unit 2 is described below.

A user places the camera case 1 onto the bracket unit 2 such the camera case 1 is placed in the first mounting position with respect to the bracket unit 2.

After this, the user tilts the camera case 1 to the second mounting position with respect to the bracket unit 2.

The user then releases the camera case 1, wherein the bracket unit 2 moves the camera case 1 to the third mounting position.

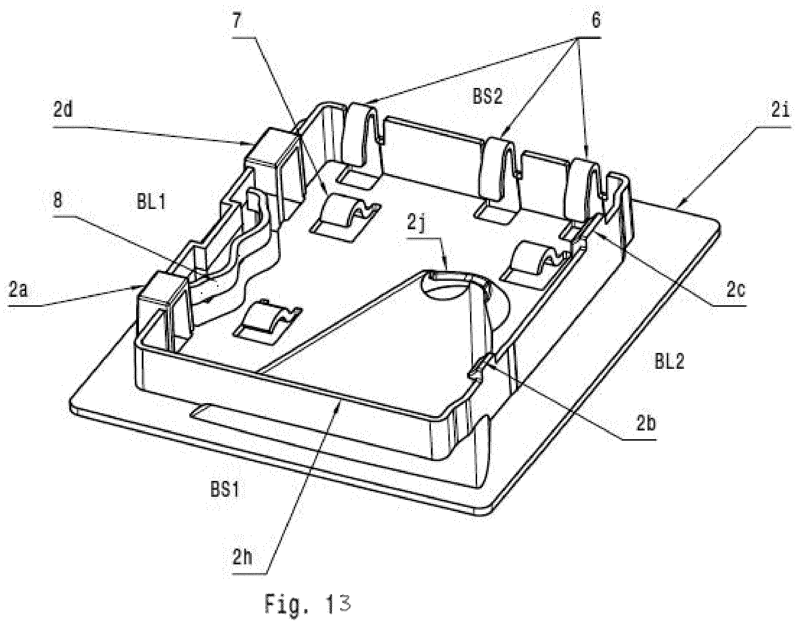

Fig. 13 shows a further bracket unit 2'. The bracket unit 2' and the bracket unit 2 have similar parts.

The further bracket unit 2' include parts of the bracket unit 2 of Fig. 2, wherein the elastic elements 3a, 3b, 4, and 5 of bracket unit 2 are replaced with further elastic elements.

In detail, the elastic element 5 is replaced with a further elastic element 8, the elastic elements 4 and 3a are replaced with further elastic elements 7, and the elastic elements 3b are replaced with further elastic elements 6.

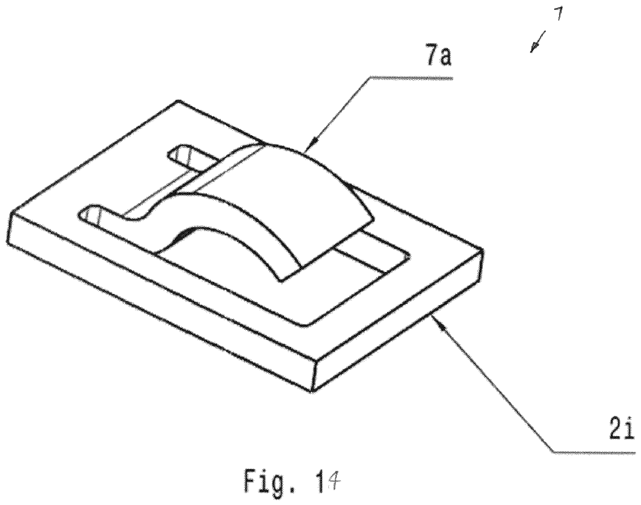

Fig. 14 depicts a cut-out of the base plate 2i with the elastic element 7. The elastic element 7 includes a spring part 7a that is integrally connected with the baseplate 2i. The spring part 7a can stretch and can then go back to its original length or shape.

Since the elastic element 7 is integrally connected with the baseplate 2i, the manufacturing process for producing the baseplate 2i also advantageously produces the elastic element 7. A separate manufacturing process is not needed to produce the elastic element 7.

In summary, the embodiments provide an improved sensor bracket for a vehicle.

The bracket is intended for attaching to a part of the vehicle, such as an interior part of the vehicle. The bracket also allows a fixing and a mounting of a sensor onto the bracket using elastic elements. One example of the sensor is a camera.

The bracket includes three elastic elements. These elastic elements can be provided as individual parts that are attached to features of the bracket. Alternatively, these elastic elements can also be provided as integral parts of the bracket.

The camera has four cylindrical pins, which are located on opposing sides of the camera. These opposing sides extend in a direction, which the camera is pointing. The camera is used for pointing and for taking pictures of objects, which are placed in front of the camera.

In use, the cylindrical pins act to place the camera in a predetermined position with respect to the bracket.

Reference surfaces of the bracket serve to contact with corresponding reference surfaces of the cylindrical pins of the camera.

The embodiments also provide a method of mounting the camera onto the bracket.

The camera is pushed onto a lateral side of the bracket, thereby compressing a lateral side elastic element. The camera is then pushed towards a baseplate for compressing a back elastic element. After this, the lateral elastic element pushes the camera into its final predetermined position.

Although the above description contains much specificity, this should not be construed as limiting the scope of the embodiments but merely providing illustration of the foreseeable embodiments. The above stated advantages of the embodiments should not be construed especially as limiting the scope of the embodiments but merely to explain possible achievements if the described embodiments are put into practice. Thus, the scope of the embodiments should be determined by the claims and their equivalents, rather than by the examples given.

### REFERENCE NUMBERS

- 1: camera case
- 1a: cylindrical pin
- 1b: cylindrical pin
- 1c: cylindrical pin
- 1d: cylindrical pin
- 1e: camera lens opening
- 2: bracket unit
- 2': further bracket unit
- 2a: bracket socket portion
- 2b: bracket plate portion
- 2c: bracket plate portion
- 2d: bracket socket portion
- 2e: bracket elastic attachment feature
- 2f: bracket elastic attachment feature
- 2fa: receiving part
- 2fb: receiving part
- 2g: bracket attachment feature
- 2h: bracket plate portion
- 2i: baseplate
- 2j: bracket lens opening
- 3: elastic element
- 3a: baseplate elastic element
- 3b: projection elastic element
- 4: elastic element
- 4a: end part
- 4b: end part
- 5: elastic element
- 6: further elastic element
- 7: further elastic element
- 7a: spring part
- 8: further elastic element
- BL1: long side
- BL2: long side
- BS1: short side
- BS2: short side
- CL1: long side
- CL2: long side
- CS1: short side
- CS2: short side

## Claims

1. A sensor module for a vehicle, the sensor module comprising
a sensor case (1) that comprises
- at least one sensor case protrusion (1a, 1d) being provided at a side of the sensor case (1), and
a bracket unit (2) that comprises
- at least one bracket socket portion (2a, 2d) for receiving the at least one sensor case protrusion (1a, 1d),
- at least one bracket lateral elastic element (5, 8), and
- at least one bracket-abutting portion (2b, 2c),
wherein
the sensor module provides a mounting position,
in the mounting position, the bracket socket portion (2a, 2d) receives the sensor case protrusion (1a, 1d), the bracket elastic lateral element (5, 8) essentially presses the sensor case (1) towards the bracket-abutting portion (2b, 2c), and the sensor case (1) is frictionally engaged with the bracket-abutting portion (2b, 2c), **characterized in that** the bracket socket portion (2a, 2d) and the at least one bracket lateral elastic element (5, 8) are provided at a first side of the bracket unit (2), the bracket-abutting portion (2b, 2c) being provided at a second side of the bracket unit (2), the second side being opposite to the first side, and that the bracket unit (2) further comprises
- at least one further bracket lateral elastic element (3b, 6), the further bracket lateral elastic element (3b, 6) being provided at a third side of the bracket unit (2), and
- at least one further bracket-abutting portion (2h), the further bracket-abutting portion (2h) being provided at a fourth side of the bracket unit (2), the fourth side being opposite to the third side,
in the mounting position, the at least one further bracket lateral elastic element (3b, 6) presses the sensor case (1) towards the further bracket-abutting portion (2h), and the sensor case (1) is frictionally engaged with the further bracket-abutting portion (2h).

2. The sensor module according to claim 1, wherein
the bracket unit (2) further comprises at least one bracket perpendicular elastic element (4, 7),
in the mounting position, the at least one bracket perpendicular elastic element (4, 7) presses the sensor case (1) in a direction, which is essentially perpendicular to the lateral direction and essentially perpendicular to the further lateral direction.

3. The sensor module according to one of the above-mentioned claims, wherein
the bracket unit (2) comprises a baseplate (2i).

4. The sensor module according to claim 3, wherein
the at least one of the bracket lateral elastic element (5, 8), of the at least one further bracket lateral elastic element (3b, 6), and of the bracket perpendicular elastic element (4, 7) is integrally connected with the baseplate (2i).

5. The sensor module according to one of the claims 2 to 4,
wherein
the bracket unit (2) comprises an elongated bracket abutting plate, which projects from the baseplate, for holding the sensor case.

6. The sensor module according to claim 5, wherein
the bracket-abutting portion (2b, 2c, 2h) is an integral part of the bracket abutting plate.

7. The sensor module according to one of the above-mentioned claims, wherein
the sensor case (1) comprises a camera case.

8. The sensor module according to one of the above-mentioned claims, wherein
the sensor case protrusion (1a, 1b, 1c, 1d) comprises a cylindrical pin.

9. The sensor module according to one of the above-mentioned claims, wherein
the sensor case protrusion (1a, 1b, 1c, 1d) is provided as an integral part of the sensor case.

10. The sensor module according to one of the above-mentioned claims, wherein
the sensor case (1) comprises two sensor case protrusions (1a, 1d) and the bracket unit (2) comprises two bracket socket portions (2a, 2d).

## Patentansprüche

1. Sensormodul für ein Fahrzeug, wobei das Sensormodul Folgendes umfasst:
ein Sensorgehäuse (1), umfassend
- zumindest einen Sensorgehäusevorsprung (1a, 1d), der auf einer Seite des Sensorgehäuses (1) bereitgestellt ist, und
eine Halterungseinheit (2), umfassend:
- zumindest einen Halterungssockelabschnitt (2a, 2d) zum Aufnehmen des zumindest einen Sensorgehäusevorsprungs (1a, 1d),
- zumindest ein elastisches Halterungsseitenelement (5, 8) und
- zumindest einen Halterungsanlageabschnitt (2b, 2c),
wobei
das Sensormodul eine Einbauposition bereitstellt, wobei in der Einbauposition der Halterungssockelabschnitt (2a, 2d) den Sensorgehäusevorsprung (1a, 1d) aufnimmt, das elastische Halterungsseitenelement (5, 8) das Sensorgehäuse (1) im Wesentlichen zum Halterungsanlageabschnitt (2b, 2c) drückt und das Sensorgehäuse (1) mit dem Halterungsanlageabschnitt (2b, 2c) reibschlüssig in Eingriff steht,
**dadurch gekennzeichnet, dass** der Halterungssockelabschnitt (2a, 2d) und das zumindest eine elastische Halterungsseitenelement (5, 8) an einer ersten Seite der Halterungseinheit (2) bereitgestellt sind, wobei der Halterungsanlageabschnitt (2b, 2c) an einer zweiten Seite der Halterungseinheit (2) bereitgestellt ist, wobei die zweite Seite der ersten Seite gegenüberliegt, und dass die Halterungseinheit (2) ferner Folgendes umfasst:
- zumindest ein weiteres elastisches Halterungsseitenelement (3b, 6), wobei das weitere elastische Halterungsseitenelement (3b, 6) an einer dritten Seite der Halterungseinheit (2) bereitgestellt ist, und
- zumindest einen weiteren Halterungsanlageabschnitt (2h), wobei der weitere Halterungsanlageabschnitt (2h) an einer vierten Seite der Halterungseinheit (2) bereitgestellt ist, wobei die vierte Seite der dritten Seite gegenüberliegt,
wobei das zumindest eine weitere elastische Halterungsseitenelement (3b, 6) in der Einbauposition das Sensorgehäuse (1) zum weiteren Halterungsanlageabschnitt (2h) drückt und das Sensorgehäuse (1) mit dem weiteren Halterungsanlageabschnitt (2h) reibschlüssig in Eingriff steht.

2. Sensormodul nach Anspruch 1, wobei die Halterungseinheit (2) ferner zumindest ein senkrechtes elastisches Halterungselement (4, 7) umfasst, wobei das zumindest eine senkrechte elastische Halterungselement (4, 7) in der Einbauposition das Sensorgehäuse (1) in eine Richtung drückt, die im Wesentlichen senkrecht zur Seitenrichtung und im Wesentlichen senkrecht zur weiteren Seitenrichtung ist.

3. Sensormodul nach einem der vorangehenden Ansprüche, wobei
die Halterungseinheit (2) eine Grundplatte (2i) umfasst.

4. Sensormodul nach Anspruch 3, wobei
das zumindest eine des elastischen Halterungsseitenelements (5, 8), des zumindest einen weiteren elastischen Halterungsseitenelements (3b, 6), und des senkrechten elastischen Halterungselements (4, 7) integral mit der Grundplatte (2i) verbunden ist.

5. Sensormodul nach einem der Ansprüche 2 bis 4, wobei
die Halterungseinheit (2) eine aus der Grundplatte ragende gestreckte Halterungsanlageplatte zum Halten des Sensorgehäuses umfasst.

6. Sensormodul nach Anspruch 5, wobei
der Halterungsanlageabschnitt (2b, 2c, 2h) ein integraler Teil der Halterungsanlageplatte ist.

7. Sensormodul nach einem der vorangehenden Ansprüche, wobei
das Sensorgehäuse (1) ein Kameragehäuse umfasst.

8. Sensormodul nach einem der vorangehenden Ansprüche, wobei
der Sensorgehäusevorsprung (1a, 1b, 1c, 1d) einen zylindrischen Stift umfasst.

9. Sensormodul nach einem der vorangehenden Ansprüche, wobei
der Sensorgehäusevorsprung (1a, 1b, 1c, 1d) als ein integraler Teil des Sensorgehäuses bereitgestellt ist.

10. Sensormodul nach einem der vorangehenden Ansprüche, wobei
das Sensorgehäuse (1) zwei Sensorgehäusevorsprünge (1a, 1d) umfasst und die Halterungseinheit (2) zwei Halterungssockelabschnitte (2a, 2d) umfasst.

## Revendications

1. Module sensible destiné à un véhicule, le module sensible comprenant
un boîtier sensible (1) qui comprend
- au moins une protrusion du boîtier sensible (1a, 1d) située sur un côté du boîtier sensible (1) et une unité de support (2) qui comprend
- au moins une partie formant douille du support (2a, 2d) destinée à recevoir la au moins une protrusion du boîtier sensible (1a, 1d),
- au moins un élément élastique latéral du support (5, 8) et
- au moins une partie attenant au support (2b, 2c),
dans lequel
le module sensible présente une position de montage ; dans la position de montage, la partie formant douille du support (2a, 2d) reçoit la protrusion du boîtier sensible (1a, 1d), l'élément élastique latéral du support (5, 8) pousse le boîtier sensible (1) vers la partie attenante au support (2b, 2c) et le boîtier sensible (1) coopère par friction avec la partie attenante au support (2b, 2c), **caractérisé en ce que** la partie formant douille du support (2a, 2d) et le au moins un élément élastique latéral du support (5, 8) sont situés sur un premier côté de l'unité de support (2), la partie attenante au support (2b, 2c) étant située sur un deuxième côté de l'unité de support (2), le deuxième côté étant à l'opposé du premier côté, et **en ce que** l'unité de support (2) comprend en outre
- au moins un élément élastique latéral du support supplémentaire (3b, 6), l'élément élastique latéral du support supplémentaire (3b, 6) étant situé sur un troisième côté de l'unité de support (2) et
- au moins une partie attenante au support supplémentaire (2h), la partie attenante au support supplémentaire (2h) étant située sur un quatrième côté de l'unité de support (2), le quatrième côté étant à l'opposé du troisième côté,
dans la position de montage, le au moins un élément élastique latéral du support supplémentaire (3b, 6) pousse le boîtier sensible (1) vers la partie attenante au support supplémentaire (2b, 2c) et le boîtier sensible (1) est en prise par friction avec la partie attenante au support supplémentaire (2h).

2. Module sensible selon la revendication 1, dans lequel
l'unité de support (2) comprend en outre au moins un élément élastique perpendiculaire du support (4, 7) et, en position de montage, le au moins un élément élastique perpendiculaire du support (4, 7) pousse le boîtier sensible (1) dans une direction qui est essentiellement perpendiculaire à la direction latérale et essentiellement perpendiculaire à la direction latérale supplémentaire.

3. Module sensible selon l'une quelconque des revendications précédentes, dans lequel
l'unité de support (2) comprend un socle (2i).

4. Module sensible selon la revendication 3, dans lequel le un au moins parmi l'élément élastique latéral du support (5, 8), le au moins un élément élastique latéral du support supplémentaire (3b, 6) et le au moins un élément élastique perpendiculaire du support (4, 7) est intégralement connecté au socle (2i).

5. Module sensible selon l'une des revendications 2 à 4, dans lequel
l'unité de support (2) comprend une plaque allongée attenante au support qui se projette à partir du socle pour maintenir le boîtier sensible.

6. Module sensible selon la revendication 5, dans lequel la partie attenante au support (2b, 2c, 2h) fait partie intégrante de la plaque attenante au support.

7. Module sensible selon l'une quelconque des revendications précédentes, dans lequel
le boîtier sensible (1) comprend un boîtier de caméra.

8. Module sensible selon l'une quelconque des revendications précédentes, dans lequel
la protrusion du boîtier sensible (1a, 1b, 1c, 1d) comprend un téton cylindrique.

9. Module sensible selon l'une quelconque des revendications précédentes, dans lequel
la protrusion du boîtier sensible (1a, 1b, 1c, 1d) se présente d'une manière telle qu'elle fait partie intégrante du boîtier sensible.

10. Module sensible selon l'une quelconque des revendications précédentes, dans lequel
le boîtier sensible (1) comprend deux protrusions (1a, 1d) et l'unité de support (2) comprend deux parties formant douilles du support (2a, 2d).
